# EUROPÄISCHE PATENTSCHRIFT

(11) **EP 2 748 518 B1**
(45) Veröffentlichungstag und Bekanntmachung des Hinweises auf die Patenterteilung: **21.09.2016**
(21) Anmeldenummer: 12798591.9
(22) Anmeldetag: 05.11.2012
(51) Int. Cl.: F21S 8/12, F21V 8/00, F21V 14/00

(54) **LED-PROJEKTIONSMODUL**
LED PROJECTION MODULE
MODULE DE PROJECTION À LED

(30) Priorität: 22.11.2011 AT 17242011
(43) Veröffentlichungstag der Anmeldung: 02.07.2014
(73) Patentinhaber: Zizala Lichtsysteme GmbH, 3250 Wieselburg (AT)
(72) Erfinder: BAUER, Friedrich, A-3252 Bergland (AT); MOSER, Andreas, A-3350 Haag (AT)
(74) Vertreter: Patentanwaltskanzlei Matschnig & Forsthuber OG
(86) Internationale Anmeldenummer: PCT/AT2012/050173
(87) Internationale Veröffentlichungsnummer: WO 2013/075157

(56) Entgegenhaltungen:
- EP-A1- 1 903 274
- EP-A2- 2 280 215
- DE-A1-102007 052 696
- DE-A1-102011 077 636

## Beschreibung

Die Erfindung betrifft ein LED-Projektionsmodul, umfassend zwei oder mehrere LED-Lichtquellen, wobei jede LED-Lichtquelle jeweils aus einer oder mehreren Leuchtdioden besteht, wobei jede LED-Lichtquelle Licht über eine jeweils ihr zugeordnete Lichteinkoppelstelle in einen Lichtleiter einkoppelt, und wobei Licht aus den Lichtleitern über eine Lichtauskoppelstelle des Lichtleiters austritt, und wobei das austretende Licht mittels einer Projektionslinse in den Außenraum zur Bildung von zumindest einer Lichtverteilung projiziert wird.

Weiters betrifft die Erfindung einen Scheinwerfer mit einem oder mehreren solcher Module. Solche LED-Lichtquellenmodule zur Erzeugung einer Lichtverteilung, beispielsweise einer Fernlichtverteilung oder Abblendlichverteilung, sind zum Beispiel aus DE 10 2007 052 696 A1 bekannt.

Vermehrt interessant im Fahrzeugscheinwerferbau werden bzw. sind auch sogenannte Teillichtverteilungen. Bei solchen Teillichtverteilungen wird entweder nur ein bestimmter Teil der (Gesamt-)Lichtverteilung auf die Fahrbahn projiziert, oder es wird ein Teil der (Gesamt-)Lichtverteilung "ausgeblendet", sodass nur der verbleibende Teil der Lichtverteilung auf der Fahrbahn zu sehen ist.

Solche Teillichtverteilungen eignen sich etwa dazu, um bestimmte Bereiche gezielt auszuleuchten, vorzugsweise aber dazu, Bereiche im Lichtbild auszublenden. So kann beispielsweise auch bei Gegenverkehr weiterhin mit Fernlicht gefahren werden, und es wird jeweils nur der Bereich, in dem sich der Gegenverkehr gerade befindet, aus der Fernlichtverteilung "ausgeblendet".

Durch die Verwendung von mehreren LED-Lichtquellen, welche getrennt ansteuerbar sind, lassen sich damit auch sogenannte Teillichtverteilungen, etwa eine Teil-Fernlichtverteilung erzeugen.

Dadurch, dass die einzelnen LED-Lichtquellen ihr Licht jeweils über einen eigenen Lichtleiter (und anschließend über eine gemeinsame Projektionslinse) auf die Fahrbahn projizieren, ergibt sich aber das Problem, dass es schwierig bzw. kaum möglich ist, bei einer Teillichtverteilung einen scharfen (vertikalen) Übergang zwischen den hellen und den dunklen Bereichen zu erzeugen.

Bei der Volllichtverteilung (Gesamtlichtverteilung), insbesondere bei Vollfernlicht ist es schwierig, eine gute Überlagerung der einzelnen Teillichtbilder zu realisieren. Eine solche gute Überlagerung ist aber für ein hohes Maximum in der Lichtverteilung und für gute Homogenität notwendig.

Es ist eine Aufgabe, ein verbessertes LED-Projektionsmodul zu schaffen, bei welchem die oben genannten Probleme nicht mehr auftreten oder zumindest deutlich verbessert sind.

Diese Aufgabe wird mit einem eingangs erwähnten LED-Projektionsmodul dadurch gelöst, dass erfingdungsgemäß die Lichtleiter für die einzelnen LED-Lichtquellen seitlich nebeneinander in einer Horizontalen liegen und unmittelbar aneinander angrenzen oder vorzugsweise einen gemeinsamen Gesamtlicht-Lichtleiter bilden, sodass zwischen benachbarten Lichtleitern Licht übertreten kann, und wobei die einzelnen Lichtaustrittsflächen nebeneinander liegen und eine Gesamtlicht-Lichtaustrittsfläche bilden, und wobei in der Gesamtlicht-Lichtaustrittsfläche, zwischen den einzelnen Lichtaustrittsflächen ein oder mehrere Vertiefungen vorgesehen sind, welche sich jeweils zumindest über einen Teil der Höhenerstreckung der Gesamtlicht-Lichtaustrittsfläche erstrecken.

Durch die Ausgestaltung von Vertiefungen in der Gesamt-Lichtaustrittsfläche wird diese in mehrere Teilbereiche unterteilt. Sind alle Teilbereiche "aktiviert", so leuchtet die gesamte Lichtaustrittsfläche, ohne dass die Spalten im Lichtbild sichtbar sind. Durch die Spalten können allerdings die einzelnen Teilbereiche scharf im Lichtbild voneinander abgegrenzt werden, sodass bei Deaktivierung von einem Teilbereich kein Streulicht aus den anderen, leuchtenden Teilbereichen im nicht beleuchteten Bereich des Lichtbildes störende Effekte ausübt.

Bei der oder den Vertiefungen handelt es sich um Spalten in der Gesamtlichtaustrittsfläche, wobei diese Spalten vorzugsweise derart ausgebildet sind, dass an den Spalten Totalreflexion für das dort auftreffende Licht auftritt, sodass durch die Spalten kein Licht in den benachbarten Lichtleiter eintreten kann.

Unter "gemeinsamer" Gesamtlicht-Lichtleiter ist dabei zu verstehen, dass im Grunde nur ein einziger Lichtleiter vorgesehen ist, der mehrere getrennte Lichtleiter"segmente" (einzelne Lichtleiter) aufweist, welche in einem gemeinsamen Bereich zusammenlaufen. Es handelt sich praktisch um miteinander verbundene Optiken, welche vorzugsweise aus einem Stück gebildet sind.

In der Regel liegt dabei die Gesamtlicht-Lichtaustrittsfläche in einer Ebene, welche normal auf die optische Achse des Moduls, also auf die optische Achse der Projektionslinse steht. Die Gesamtlicht-Lichtaustrittsfläche (und natürlich auch die einzelnen Lichtaustrittsflächen) liegt dabei üblicherweise in der (vertikalen) Ebene, welche den Brennpunkt der Projektionslinse enthält und normal auf die optische Achse der Linse steht, oder in einer Ebene, welche in der Nähe des Brennpunktes verläuft.

Es kann aber auch vorgesehen sein, dass die (ebene) Gesamtlicht-Lichtaustrittsfläche schräg zu der optischen Achse verläuft, oder dass die Gesamtlicht-Lichtaustrittsfläche überhaupt in Form einer Freiform-Fläche (etwa eine Fläche angepasst an die Fokalkurve der (Projektions-)Linse) ausgestaltet ist, um etwa die Lichtverteilung, z.B. eine Fernlichtverteilung, nach oben hin im Lichtbild besser verlaufen zu lassen.

Idealerweise verläuft die ebene Gesamtlicht-Lichtaustrittsfläche durch den Brennpunkt der Projektionslinse, ebenso wie dies bei einer Freiform-Fläche mit Vorteil der Fall ist.

Es kann aber auch vorgesehen sein, die Lichtaustrittsfläche gezielt zu de-fokussieren, um auf diese Weise die Härte des Hell-Dunkelübergangs zu steuern; auch die Auswirkungen der Chromatischen Aberration können auf diese Art und Weise beeinflusst werden.

Bei einer konkreten Ausführungsform ist vorgesehen, dass eine zentrale Lichtleitergruppe mit zumindest einem Lichtleiter vorgesehen ist, wobei weiters links und rechts von der zentralen Lichtleitergruppe jeweils eine linke und eine rechte Lichtleitergruppe vorgesehen sind, wobei die linke und /oder die rechte Lichtleitergruppe jeweils zumindest einen Lichtleiter mit zugeordneter LED-Lichtquelle umfasst.

Jede dieser Lichtleitergruppen, welche jeweils eine (Teillicht-)Lichtaustrittsfläche bildet, erzeugt ein eigenes Teillichtbild, sodass insgesamt drei Teillichtbilder erzeugt werden können.

Vorzugsweise ist vorgesehen, dass die mittlere Lichtleitergruppe genau einen Lichtleiter umfasst.

Ebenso ist mit Vorteil vorgesehen, dass die linke und/oder die rechte Lichtleitergruppe jeweils genau einen Lichtleiter umfasst.

Weiters kann vorgesehen sein, dass das Licht der zumindest einen LED-Lichtquelle des zentralen Lichtleiters der zentralen Lichtleitergruppe von dem zentralen Lichtleiter, insbesondere von der Lichteintrittsfläche des zentralen Lichtleiters im Wesentlichen parallel zur optischen Achse des Moduls gerichtet wird.

Weiters kann vorgesehen sein, dass die zumindest eine LED-Lichtquelle einer seitlichen Lichtleitergruppe Licht unter einem Winkel ungleich 0°, auf die optische Achse des Moduls gerichtet, in den zugehörigen Lichtleiter einspeist.

Dies hat den Vorteil, dass eine kompakte Gesamtlicht-Lichtaustrittsfläche mit gewünschten Dimensionen erreicht wird, gleichzeitig aber ausreichend Bauraum zur Anbringung der LED-Lichtquellen vorhanden ist.

Um den erwünschten Effekt der Vertiefungen über möglichst die gesamte vertikale Erstreckung der Lichtaustrittsfläche zu erhalten, ist vorgesehen, dass sich eine Vertiefung zwischen zwei Lichtaustrittsflächen von den unteren Begrenzungsflächen der nebeneinander liegenden Lichtleiter bzw. der unteren Begrenzungsfläche des Gesamtlicht-Lichtleiters nach oben weg erstreckt.

In obigem Sinne ist es auch zweckmäßig, wenn sich die Vertiefung zwischen zwei Lichtaustrittsflächen vollständig bis an die oberen Begrenzungsflächen der nebeneinander liegenden Lichtleiter bzw. bis an die obere Begrenzungsfläche des Gesamtlicht-Lichtleiters erstreckt.

Allerdings kann auch vorgesehen sein, dass sich die Vertiefung zwischen zwei Lichtaustrittsflächen nicht vollständig bis an die oberen Begrenzungsflächen der nebeneinander liegenden Lichtleiter bzw. bis an die obere Begrenzungsfläche des Gesamtlicht-Lichtleiters erstreckt, sodass sich im oberen Bereich der nebeneinander liegenden Lichtleiter bzw. des Gesamtlicht-Lichtleiters eine durchgehende Kante ergibt. Diese Ausgestaltung ist dann von Vorteil, wenn wie weiter unten noch erörtert, mit dem Modul zusätzlich eine abgeblendete Lichtverteilung, z.B. eine Abblendlichtverteilung erzeugt werden soll, wobei die obere - durchgehende - Kante des Gesamtlichtleiters dann zur Erzeugung einer (durchgehenden) Hell-Dunkel-Grenze im Lichtbild verwendet wird.

Weiters ist es zweckmäßig, wenn eine Vertiefung in einem vorderen Bereich, d.h. im Bereich der Lichtaustrittsflächen, eine definierte Breite aufweist, welche vorzugsweise über die gesamte Höhe der Vertiefung konstant ist, und dass sich die Vertiefung nach hinten hin, von den Lichtaustrittsflächen weggerichtet, verjüngt.

Insbesondere ist es günstig, wenn die eine Vertiefung begrenzenden Wände aufeinander zu laufen, und vorzugsweise in einer spitzen Kante zusammen laufen.

Außerdem kann vorgesehen sein, dass die innere Wand, d.h. die der zentralen Lichtleitergruppe zugewandte Wand einer Vertiefung eben ausgebildet ist, vorzugsweise als eine vertikale Ebene.

Desweiteren kann vorgesehen sein, dass die äußere Wand einer Vertiefung gekrümmt ausgebildet ist, vorzugsweise von der inneren Wand weggekrümmt.

Überhaupt ist dabei vorzugsweise vorgesehen, dass eine Vertiefung derart ausgelegt, d.h. hinsichtlich ihrer Form und/ oder hinsichtlich der Länge ihrer Erstreckung nach hinten, von der bzw. den Lichtaustrittsfläche(n) weg derart ausgebildet ist, dass Licht aus der rechten/linken Lichtleitergruppe bzw. aus dem zumindest einen rechten/linken Lichtleiter nicht in die linke/rechte Lichtleitergruppe bzw. den zumindest einen linken/rechten Lichtleiter eintreten kann.

Licht aus dem rechten Lichtleiter wird an der Vertiefung/ Spalte zwischen dem linken und dem mittleren Lichtleiter totalreflektiert (und zwar an der geraden Wand), tritt also über den mittleren Lichtleiter (bzw. die mittlere Lichtleitergruppe) aus. Entsprechendes gilt für Licht aus dem linken Lichtleiter, dieses wird an der Vertiefung/Spalte zwischen dem rechten und dem mittleren Lichtleiter toralreflektiert und tritt über den mittleren Lichtleiter aus dem Modul aus.

Auf diese Weise kann im Lichtbild eine scharfe vertikale Hell-Dunkel-Grenze erzeugt werden.

Die Tiefe des Einschnitts bzw. der Vertiefung ist derart gewählt, dass Licht von einer seitlichen LED-Lichtquelle nicht in den äußeren gegenüberliegenden Lichtleiter gelangen kann.

Weiters ist es zweckmäßig, wenn die Lichteinkoppelstelle für den mittleren Lichtleiter soweit in Richtung Lichtaustrittsfläche vorgezogen und ausgestaltet ist, dass Licht von einer seitlichen LED-Lichtquelle nicht an der Vertiefung vorbei gelangen kann.

Konkret kann vorgesehen sein, dass der Gesamt-Lichtleiter an seiner rückwärtigen, von den Lichtauskoppelflächen abgewandten Seite, derart ausgebildet ist, dass Lichtstrahlen von einer äußeren Lichtquelle nicht durch eine einer anderen äußeren LED-Lichtquelle zugeordnete Lichtauskoppelfläche austreten können, wobei vorzugsweise rückseitige Vertiefungen vorgesehen sind, welche Licht von den äußeren LED-Lichtquellen, welche in den einer anderen äußeren LED-Lichtquelle zugeordneten Lichtleiter gelangen würden, abgeblockt werden.

Beispielsweise ist dazu der Gesamtlichtleiter in der Mitte derart nach vorne, in Richtung der Lichtaustrittsflächen vorgezogen, dass Licht, welches an den frontseitigen Vertiefungen vorbei in einen äußeren Lichtleiter gelangen könnte, wobei dieses Licht von einer äußeren, diesem Lichtleiter nicht zugeordneten Lichtquelle stammt, abgeblockt und gegebenenfalls reflektiert wird.

Bei einer Variante ist dieser vorgezogene Bereich in der Mitte des Gesamtlichtleiters als Lichteinkoppelstelle für eine mittlere LED-Lichtquelle ausgebildet.

Durch den Spalt ergibt sich in der Überlagerung aller Lichtanteile ein Fernlicht mit Inhomogenität im Spaltbereich, die unerwünscht ist. Durch die Verwendung einer gekrümmten Wand kann diese entsprechend auf die optischen Gegebenheiten angepasst werden, sodass die Inhomogenitäten verhindert oder zumindest abgeschwächt werden können.

Bei einer weiteren Variante kann vorgesehen sein, dass eine Vertiefung derart ausgelegt ist, d.h. hinsichtlich ihrer Form und/ oder hinsichtlich der Länge ihrer Erstreckung nach hinten, von der bzw. den Lichtaustrittsfläche(n) weg gerichtet, derart ausgebildet ist, dass Licht aus der mittleren Lichtleitergruppe bzw. aus dem zumindest einen mittleren Lichtleiter nicht in die linke bzw. rechte Lichtleitergruppe bzw. den zumindest einen linken bzw. zumindest einen rechten Lichtleiter eintreten kann.

Insbesondere ist in diesem Fall darauf zu achten, dass die Lichteinkoppelstelle für die mittlere LED-Lichtquelle entsprechend ausgebildet ist, beispielsweise entsprechend gekrümmt ist, damit im Zusammenspiel mit der oder den Vertiefungen keine Lichtstrahlen in die seitlichen Lichtleiter eintreten können.

In diesem Fall kann auch die mittlere Lichtleitergruppe für die Teillichtverteilung verwendet werden, die mittlere Lichtleitergruppe bzw. der mittlere Lichtleiter kann bereits bei vorbeifahrendem Gegenverkehr eingeschaltet werden, ohne diesen zu blenden.

Bei einer konkreten Ausführungsform ist vorgesehen, dass mittels der Lichtleiter bzw. mittels des Gesamtlicht-Lichtleiters eine Fernlichtverteilung bzw. eine Teilfernlichtverteilung erzeugbar ist.

Dazu sind die einzelnen LED-Lichtquellen unabhängig voneinander ansteuerbar und entsprechend ein- und ausschaltbar bzw. gegebenenfalls auch dimmbar. Es kann auch von Vorteil sein, dass jede Leuchtdiode einer LED-Lichtquelle ebenfalls noch separat ansteuerbar ist.

Um, wie eingangs bereits angesprochen, mit einem erfindungsgemäßen Modul zusätzlich auch noch eine abgeblendete Lichtverteilung, zum Beispiel eine Abblendlichtverteilung erzeugen zu können, kann weiters noch vorgesehen sein, dass oberhalb der Lichtleiter bzw. des Gesamtlicht-Lichtleiters zumindest eine LED-Lichtquelle angeordnet ist, welche Licht auf zumindest eine Optik, z.B. zumindest einen Reflektor emittiert, und wobei das von der zumindest einen Optik, z.B. von dem zumindest einen Reflektor emittierte Licht in einen unteren Bereich der Projektionslinse abgestrahlt wird, und wobei die obere Kante, welche die Gesamtlicht-Lichtaustrittsfläche begrenzt, als Hell-Dunkel-Grenze im Lichtbild abgebildet wird.

Mit der Optik - etwa in Form von Reflektoren, Linsen, oder vorzugsweise Primäroptiken, welche Primäroptiken als Lichtleiter ausgeführt sind (etwa mit der Form eines Reflektors oder wie in der AT504505 gezeigt), o.ä. - wird eine Abblendlichtverteilung in der Brennebene einer zugeordnete Linse abgebildet, welche dann von der Linse vor dem Fahrzeug abgebildet wird.

Beispielsweise sind dabei zwei LED-Lichtquellen mit jeweils einem zugeordneten Reflektor vorgesehen.

Von Vorteil ist es, wenn die Oberseite und/oder die Unterseite der Lichtleiter bzw. des Gesamtlicht-Lichtleiters Licht zumindest bereichsweise reflektierend ausgebildet ist/ sind.

Beispielsweise sind Ober- und/oder Unterseite beschichtet, z.B. mit einer spiegelnden Schicht beschichtet, etwa bedampft.

Die Unterseite/Oberseite kann dabei z.B. in einem hinteren Bereich reflektierend und an der Kante absorbierend ausgebildet sein, um eine scharfe HD-Linie zu erhalten.

Auf diese Weise können Lichtverluste vermieden werden bzw. kann, wenn zwei unterschiedliche Lichtverteilungen erzeugt werden, vermieden werden, dass diese sich gegenseitig negativ durch durchtretendes Licht beeinflussen.

Hinsichtlich ihres Verlaufes ist dann vorzugsweise die Kante zur Bildung einer Hell-Dunkelgrenze für eine Abblendlichtverteilung ausgebildet, weist also entsprechende Abschnitte auf, um eine gesetzeskonforme Abblendlichtverteilung zu erzeugen.

Die Erfindung betrifft wie eingangs schon erwähnt auch noch einen Scheinwerfer mit einem oder vorzugsweise mehreren der oben beschriebenen Module.

Vorzugsweise ist bei einem solchen Scheinwerfer vorgesehen, dass zumindest eines der Module, vorzugsweise alle Module um eine im Wesentlichen vertikale Achse verschwenkbar sind.

Wenn das gesamte Modul schwenkbar ist, dann verläuft die Schwenkachse idealerweise durch den Schwerpunkt des Moduls. So ist am wenigsten Kraftaufwand notwendig und Vibrationen oder dergleichen wirken sich nur wenig aus.

Mittels eines oder mehrerer beweglicher Module können Teilbereiche im Lichtbild nicht nur statisch "herausgeschnitten" werden, sondern dieser herausgeschnittene Teilbereich kann auch durch Verschwenken des Moduls um die vertikale Achse verschwenkt werden (mit dem gesamten Lichtbild, welches das jeweilige verschwenkte Modul erzeugt). Dadurch ist ein Nachführen des ausgeschnittenen Lichtabschnitts entsprechend der Bewegung des Gegenverkehrs oder von vorausfahrenden Fahrzeugen möglich.

Es kann aber auch vorgesehen sein, dass in einer kostengünstigeren Ausführungsform keine Verschwenkung erfolgt bzw. vorgesehen ist, wodurch trotzdem ein automatisches Fernlicht deutlich früher wieder aktiviert werden kann als ohne die Möglichkeit der statischen Ausblendung von Teilbereichen.

Anstelle der Verschwenkung des gesamten Moduls kann auch vorgesehen sein, dass die Projektionslinse eines oder mehrerer Module um jeweils eine vertikale Achse verschwenkbar ist.

Optisch optimal ist es dabei, wenn die Achse nahe der Brennlinie der Projektionslinse, vorzugsweise durch den Brennpunkt der Projektionslinse verläuft.

Im Folgenden ist die Erfindung an Hand der Zeichnung näher erörtert. In dieser zeigt
Fig. 1 eine schematische Ansicht eines LED-Lichtmoduls von vorne mit strichliert dargestellter Linse,
Fig. 2 das Modul aus Figur 1 in einer Ansicht von oben,
Fig. 3 das Modul aus Figur 1 in einer Seitenansicht,
Fig. 4 einen Schnitt entlang der Linie A-A aus Figur 2,
Fig. 5 einen Schnitt entlang der Linie B-B aus Figur 1,
Fig. 5a eine Detailansicht des Lichtleiters im Bereich einer Vertiefung,
Fig. 6 die mit den beiden äußeren Lichtleitern erzeugte Lichtverteilung,
Fig. 7 die Lichtverteilung erzeugt mit dem in Lichtaustrittsrichtung gesehen linken Teil-Lichtleiter,
Fig. 8 die Lichtverteilung erzeugt mit dem in Lichtaustrittsrichtung gesehen rechten Teil-Lichtleiter,
Fig. 9 die Lichtverteilung erzeugt mit dem in Lichtaustrittsrichtung gesehen mittleren Teil-Lichtleiter,
Fig. 10 die mit einem Scheinwerfer erzeugte Lichtverteilung (Abblendlicht + Teil-Fernlicht),
Fig. 11 die Lichtverteilung bei Fernlicht (Vollfernlicht), und
Fig. 12 beispielhaft ein adaptives Fernlicht erzeugt mit zwei erfindungsgemäßen Scheinwerfern.

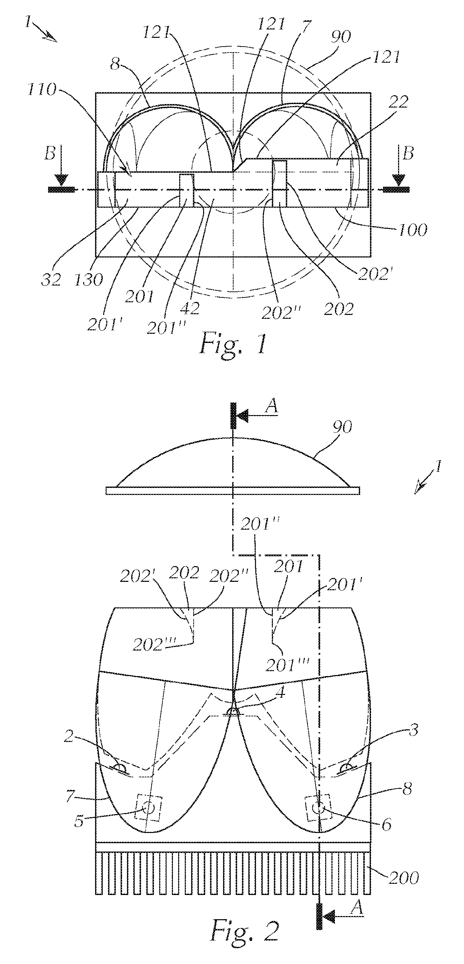

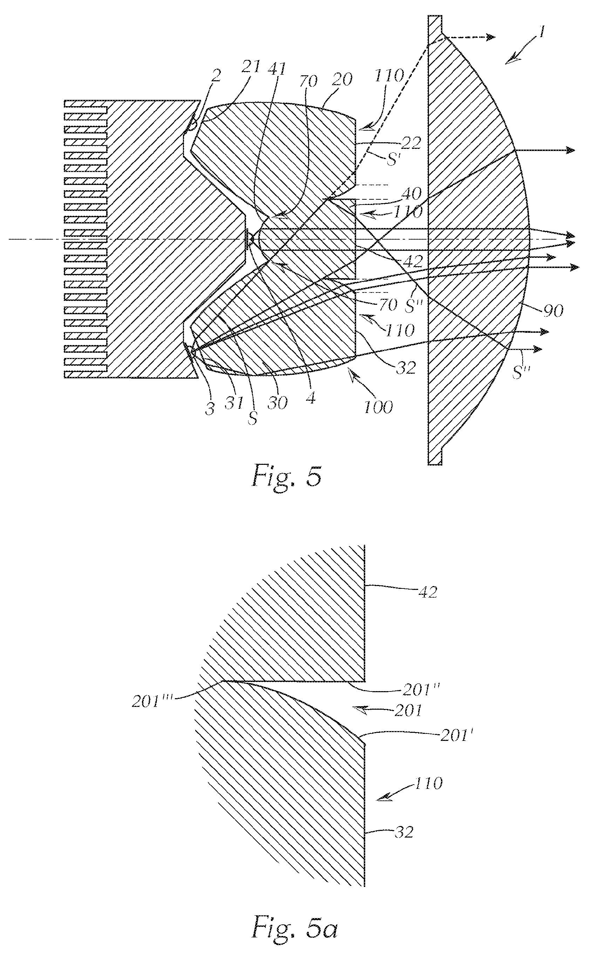

Die Figuren 1 - 5 zeigen ein erfindungsgemäßes LED-Projektionsmodul 1. Das Modul 1 besteht aus einem Gesamtlicht-Lichtleiter 100, welcher im Folgenden auch als Lichtleitkörper 100 bezeichnet wird. In diesen Lichtleitkörper 100 wird von 3 LED-Lichtquellen 2, 3, 4 (Figur 2), welche jeweils aus einer oder mehreren Leuchtdioden bestehen, über entsprechende Lichteinkoppelstellen 21, 31, 41 (Figur 5) Licht in den Lichtleitkörper 100 eingekoppelt. Bei den Lichteinkoppelstellen handelt es sich beispielsweise um Licht kollimierende Einkoppelstellen, dh gleichsam eine Öffnung, in welcher die jeweilige LED-Lichtquelle sitzt und von einer Kugelschale umschlossen wird, um das Licht zu kollimieren. Das Licht tritt aus dem Lichtleitkörper 100 über Lichtauskoppelstelle 22, 32, 42 wieder aus, und das austretende Licht wird mittels einer Projektionslinse 90 in den Außenraum zur Bildung einer Lichtverteilung, im konkreten Fall zur Bildung einer Fernlicht- oder Teilfernlichtverteilung, projiziert.

Mittels dieser LED-Lichtquellen 2, 3, 4 wird eine Fernlichtverteilung bzw. eine Teilfernlichtverteilung erzeugt. Dazu sind die einzelnen LED-Lichtquellen unabhängig voneinander ansteuerbar und entsprechend ein- und ausschaltbar bzw. gegebenenfalls auch dimmbar. Es kann auch von Vorteil sein, dass jede Leuchtdiode einer LED-Lichtquelle ebenfalls noch separat ansteuerbar ist.

Die Lichtauskoppelstelle 22, 33, 42 sind jeweils an einem Lichtleiter 20, 30, 40 ausgebildet, diese drei Lichtleiter zusammen bilden den Lichtleitkörper 100. Bei der gezeigten bevorzugten Ausführungsform der Erfindung sind dabei die drei Lichtleiter 20, 30, 40 aus einem Stück ausgebildet.

Die Lichtleiter 20, 30, 40 für die einzelnen LED-Lichtquellen 2, 3, 4 liegen seitlich nebeneinander in einer Horizontalen, grenzen unmittelbar aneinander an und bilden, wie oben schon erwähnt, vorzugsweise einen einstückigen Gesamtlicht-Lichtleiter 100, sodass zwischen benachbarten Lichtleitern 20, 30, 40 Licht übertreten kann.

Die einzelnen Lichtaustrittsflächen 22, 32, 42 liegen nebeneinander und bilden eine Gesamtlicht-Lichtaustrittsfläche 110. In der Gesamtlicht-Lichtaustrittsfläche 110, zwischen den einzelnen Lichtaustrittsflächen 22, 32, 42, sind Vertiefungen 201, 202 vorgesehen, welche sich jeweils zumindest über einen Teil der Höhenerstreckung (also in Vertikalrichtung) der Gesamtlicht-Lichtaustrittsfläche 110 erstrecken.

Das von der LED-Lichtquelle 4 emittierte Licht wird von der Lichteintrittsfläche 41 des zentralen Lichtleiters 40 bei dem gezeigten Beispiel im Wesentlichen parallel zur optischen Achse des Moduls 1 gerichtet.

Die zumindest eine LED-Lichtquelle 2, 3 des jeweiligen seitlichen Lichtleiters 20, 30 ist bei dem gezeigten Beispiel unter einem Winkel ungleich 0°, auf die optische Achse x des Moduls hin gerichtet, und speist so Licht in den zugehörigen Lichtleiter 20, 30 ein (Figur 2).

Dies hat den Vorteil, dass eine kompakte Gesamtlicht-Lichtaustrittsfläche 100 mit gewünschten Dimensionen erreicht wird, gleichzeitig aber ausreichend Bauraum zur Anbringung der LED-Lichtquellen vorhanden ist.

Die LED-Lichtquellen sind dabei auf einem Kühlkörper 200 (Figur 2) angeordnet. Ebenso sind die weiter unten noch näher erörterten LED-Lichtquellen 5, 6, die zur Erzeugung einer Abblendlichtverteilung verwendet werden, auf diesem Kühlkörper 200 angebracht.

Ein Aspekt der Erfindung ist es, neben einer Gesamtlicht-Lichtverteilung (etwa einer Fernlicht-Lichtverteilung), bei der alle drei LED-Lichtquellen 2, 3, 4 eingeschaltet sind, auch Teillicht-Lichtverteilungen, im vorliegenden Fall eine Teilfernlicht-Lichtverteilung zu erzeugen, bei der zum Beispiel nur eine oder nicht alle LED-Lichtquellen aktiv sind. Um hier ein vertikal scharf abgegrenztes Teilfernlicht zu erhalten, ohne Störlicht von der/den anderen aktiven LED-Lichtquellen, sind die Vertiefungen 201,202 vorgesehen.

Um den erwünschten Effekt der Vertiefungen über möglichst die gesamte vertikale Erstreckung der Lichtaustrittsfläche zu erhalten, ist vorgesehen, dass sich eine Vertiefung 201, 202 zwischen zwei Lichtaustrittsflächen 32, 42; 22, 42 unmittelbar von der unteren Begrenzungsfläche 130 des Gesamtlicht-Lichtleiters 100 nach oben weg erstreckt.

Bei der gezeigten Variante erstreckt sich die Vertiefung 201, 202 zwischen zwei Lichtaustrittsflächen 32, 42; 22, 42 nicht vollständig bis an die obere Begrenzungsfläche 120 des Gesamtlicht-Lichtleiters 100, sodass sich im oberen, vorderen Bereich des Gesamtlicht-Lichtleiters 100 eine durchgehende Kante 121 ergibt. Diese Ausgestaltung ist dann von Vorteil, wenn wie weiter unten noch erörtert, mit dem Modul zusätzlich eine abgeblendete Lichtverteilung, z.B. eine Abblendlichtverteilung erzeugt werden soll, wobei die obere - durchgehende - Kante 121 des Gesamtlichtleiters dann zur Erzeugung einer (durchgehenden) Hell-Dunkel-Grenze im Lichtbild des Abblendlichtes verwendet wird.

Weiters ist es zweckmäßig, wenn die Vertiefungen 201, 202 in einem vorderen Bereich, d.h. im Bereich der Lichtaustrittsflächen 22, 32, 42; 110, eine definierte Breite aufweisen, welche vorzugsweise über die gesamte Höhe der Vertiefung 201, 202 konstant ist. Nach hinten hin, von den Lichtaustrittsflächen 22, 32, 42; 110 weggerichtet, verjüngen sich die Vertiefungen 201, 202.

Wie insbesondere in Figur 5a gut zu erkennen, ist es günstig, wenn die die Vertiefungen 201, 202 begrenzenden Wände 201', 201"; 202', 202" aufeinander zu laufen, und vorzugsweise jeweils in einer spitzen Kante 201"', 202"' zusammen laufen.

Die inneren Wände 201", 202", d.h. die der zentralen Lichtleitergruppe zugewandten Wände einer Vertiefung 201, 202 sind eben ausgebildet, vorzugsweise als eine vertikale Ebene. Grundsätzlich ist es aber auch denkbar, dass diese Wände gekrümmt ausgebildet sind. Bedingung für diese Seitenfläche ist, dass sie für Strahlen der gegenüberliegenden LED (2 oder 3) totalreflektierend ausgebildet ist.

Die äußere Wände 201', 202' der Vertiefungen 201, 202 sind gekrümmt ausgebildet, vorzugsweise von der inneren Wand 201", 202" weggekrümmt.

Generell ist vorgesehen, dass eine Vertiefung 201, 202 derart ausgelegt, d.h. hinsichtlich ihrer Form und/oder hinsichtlich der Länge ihrer Erstreckung nach hinten, von der Gesamt-Lichtaustrittsfläche weg derart ausgebildet ist, dass Licht aus dem rechten/linken Lichtleiter 20, 30 nicht in den linken/ rechten Lichtleiter 30, 20 eintreten kann.

Figur 5 zeigt einen ausgezeichneten Lichtstrahl S aus dem rechten Lichtleiter 30 von der LED-Lichtquelle 3, welcher ohne Vertiefung 202 als S' in den linken Lichtleiter 20 eintreten und über die Lichtaustrittsfläche 22 austreten würde. Im Falle von Teilfernlicht (d.h. abgeschaltete LED-Lichtquelle 2 und eventuell abgeschaltete LED-Lichtquelle 4) würde so Licht über die Lichtaustrittsfläche 22 austreten und das Teilfernlicht stören bzw. zerstören.

So aber wird Licht aus dem rechten Lichtleiter an der Vertiefung/ Spalte 202 zwischen dem linken und dem mittleren Lichtleiter totalreflektiert (und zwar an der geraden Wand 202"), tritt also über den mittleren Lichtleiter aus (Lichtstrahl S"). Entsprechendes gilt für Licht aus dem linken Lichtleiter, dieses wird an der Vertiefung/Spalte zwischen dem rechten und dem mittleren Lichtleiter toralreflektiert und tritt über den mittleren Lichtleiter aus dem Modul aus.

Auf diese Weise kann im Lichtbild eine scharfe vertikale Hell-Dunkel-Grenze erzeugt werden, wenn die linke/rechte und eventuell die mittlere LED-Lichtquelle abgeschaltet wird.

Die Tiefe des Einschnitts bzw. der Vertiefung ist derart gewählt, dass Licht von einer seitlichen LED-Lichtquelle nicht in den äußeren gegenüberliegenden Lichtleiter gelangen kann.

Dazu ist es weiters zweckmäßig, wenn die Lichteinkoppelstelle 41 für den mittleren Lichtleiter 40 soweit in Richtung Lichtaustrittsfläche vorgezogen und ausgestaltet ist, dass Licht von einer seitlichen LED-Lichtquelle nicht an der Vertiefung vorbei gelangen kann. Vorzugsweise ist dabei die Lichteinkoppelstelle 41 gekrümmt, zum Beispiel von der LED-Lichtquelle 4 Weg gekrümmt, ausgebildet, sodass sich eine Vertiefung 70 an der rückwärtigen Seite des Gesamtlichtleiters 100 ergibt. In dem gezeigten Beispiel wirkt die Lichteintrittsfläche 41 dabei sogar als Linse, welche das Licht der LED-Lichtquelle parallel richtet.

Durch die Spalte ergibt sich in der Überlagerung aller Lichtanteile ein Fernlicht mit Inhomogenität im Spaltbereich, die unerwünscht ist. Durch die Verwendung einer gekrümmten Wand 201', 202' kann diese entsprechend auf die optischen Gegebenheiten angepasst werden, sodass die Inhomogenitäten vermieden oder zumindest abgeschwächt werden können.

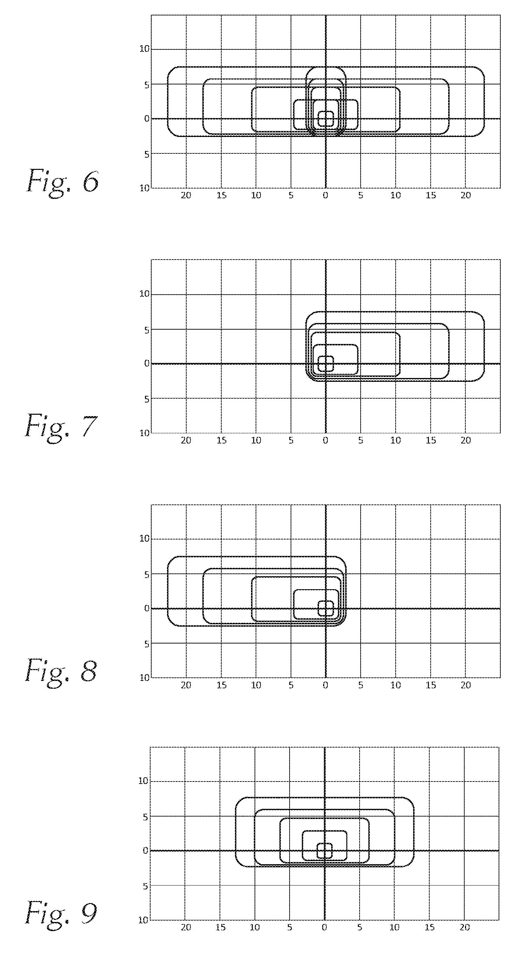

Die mittlere LED-Lichtquelle 4 ist dazu da, ein Maximum im Lichtbild zu erzeugen. Dies ist der in der Figur dargestellte Fall. Hierzu wird die Lichteinkoppelstelle der LED-Lichtquelle 4 derart gestaltet, dass die Strahlen im Wesentlichen parallel gerichtet werden und ein Lichtmaximum in der Mitte der Lichtverteilung erzeugen (siehe Figur 9).

Dies muss aber nicht zwingend so sein. Denkbar ist natürlich auch, dass die Einkoppelstelle so gestaltet wird, dass nur ein Teil des emittierten Lichts ein Maximum erzeugt, vorzugsweise der mittlere lichtstarke Teil des Lichts, und seitliche Bereiche des emittierten Lichts zur Breite beitragen. Dieser Fall ist in den Figuren nicht dargestellt.

Die Fig. 5 wurde für den ersten zitierten Fall angepasst, der Strahlengang der LED-Lichtquelle 4 wird hier also etwas korrigiert.

Bei einer anderen, nicht gezeigten Variante kann vorgesehen sein, dass die Vertiefungen derart ausgelegt sind, d.h. hinsichtlich ihrer Form und/oder hinsichtlich der Länge ihrer Erstreckung nach hinten, von der bzw. den Lichtaustrittsfläche(n) weg gerichtet, derart ausgebildet sind, dass Licht aus der mittleren Lichtleitergruppe bzw. aus dem zumindest einen mittleren Lichtleiter 40 nicht in die linke bzw. rechte Lichtleitergruppe bzw. den zumindest einen linken bzw. zumindest einen rechten Lichtleiter 20, 30 eintreten kann.

Insbesondere ist in diesem Fall darauf zu achten, dass die Lichteinkoppelstelle für die mittlere LED-Lichtquelle entsprechend ausgebildet ist, beispielsweise entsprechend gekrümmt ist, damit im Zusammenspiel mit der oder den Vertiefungen keine Lichtstrahlen in die seitlichen Lichtleiter eintreten können.

In diesem Fall kann auch die mittlere Lichtleitergruppe für die Teillichtverteilung verwendet werden, die mittlere Lichtleitergruppe bzw. der mittlere Lichtleiter kann bereits bei vorbeifahrendem Gegenverkehr eingeschaltet werden, ohne diesen zu blenden.

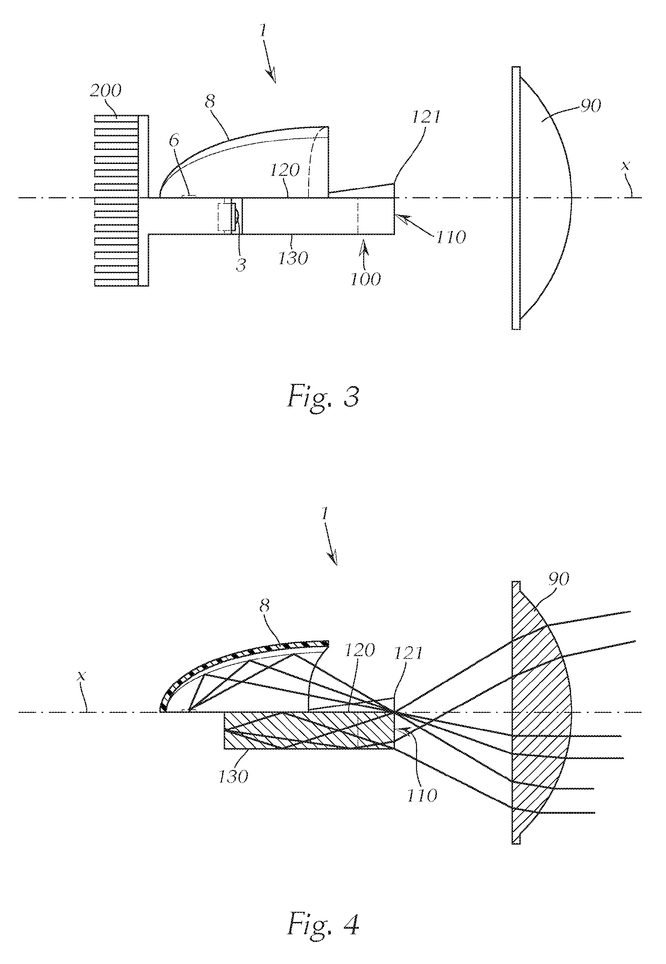

Um, wie eingangs bereits angesprochen, mit einem erfindungsgemäßen Modul zusätzlich auch noch eine abgeblendete Lichtverteilung, zum Beispiel eine Abblendlichtverteilung erzeugen zu können, kann weiters noch vorgesehen sein, dass oberhalb des Gesamtlicht-Lichtleiters 100 zumindest eine, vorzugsweise zwei oder mehr LED-Lichtquellen 5, 6 angeordnet sind, welche Licht auf zumindest einen, vorzugsweise zwei oder Reflektoren 7, 8 bzw. Optiken emittieren. Das von den Reflektoren 7, 8 emittierte Licht wird in einen unteren Bereich der Projektionslinse 90 abgestrahlt (Figur 4), wobei die obere Kante 121, welche die Gesamtlicht-Lichtaustrittsfläche 110 begrenzt, als Hell-Dunkel-Grenze im Lichtbild des Abblendlichtes abgebildet wird.

Bei der in den Figuren gezeigten Ausführungsform werden Reflektoren 7, 8 verwendet, es kann aber im Grunde an Stelle eines Reflektors jede andere dazu geeignete (Primär-)Optik verwendet werden.

Von Vorteil ist es, wenn die Oberseite 120 und/oder die Unterseite 130 des Gesamtlicht-Lichtleiters 100 Licht reflektierend ausgebildet ist/ sind.

Beispielsweise sind Ober- und/oder Unterseite beschichtet, z.B. mit einer spiegelnden Schicht beschichtet, etwa bedampft.

Auf diese Weise können Lichtverluste vermieden werden bzw. kann, wenn zwei unterschiedliche Lichtverteilungen erzeugt werden, vermieden werden, dass diese sich gegenseitig negativ durch durchtretendes Licht beeinflussen.

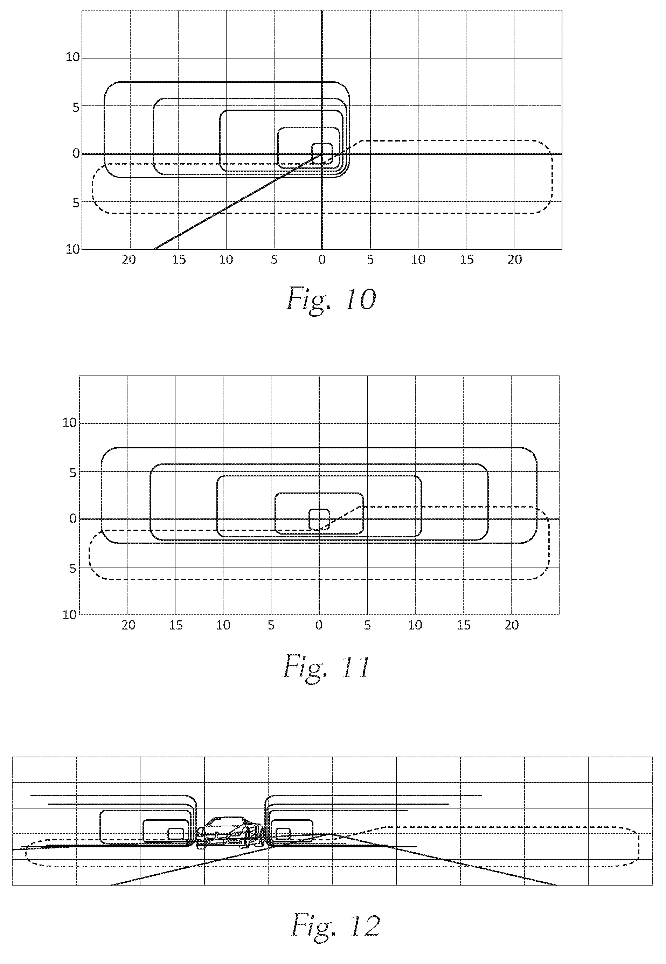

Hinsichtlich ihres Verlaufes ist dann vorzugsweise die Kante 121 zur Bildung einer Hell-Dunkelgrenze für eine Abblendlichtverteilung ausgebildet, weist also entsprechende Abschnitte auf, um eine gesetzeskonforme Abblendlichtverteilung (diese ist in den Figuren 10 - 12 mit strichlierter Linie angedeutet) zu erzeugen (Figur 1).

Ein Fahrzeugscheinwerfer besteht aus einem oder vorzugsweise mehreren der oben beschriebenen Module.

Vorzugsweise ist bei einem solchen Scheinwerfer vorgesehen, dass zumindest eines der Module, vorzugsweise alle Module um eine im Wesentlichen vertikale Achse verschwenkbar sind.

Mittels eines oder mehrerer beweglicher Module können Teilbereiche im Lichtbild nicht nur statisch "herausgeschnitten" werden, sondern dieser herausgeschnittene Teilbereich kann auch durch Verschwenken des Moduls um die vertikale Achse verschwenkt werden (mit dem gesamten Lichtbild, welches das jeweilige verschwenkte Modul erzeugt). Dadurch ist ein Nachführen des ausgeschnittenen Lichtabschnitts entsprechend der Bewegung des Gegenverkehrs oder von vorausfahrenden Fahrzeugen möglich.

Es kann aber auch vorgesehen sein, dass in einer kostengünstigeren Ausführungsform keine Verschwenkung erfolgt bzw. vorgesehen ist, wodurch trotzdem ein automatisches Fernlicht deutlich früher wieder aktiviert werden kann wie ohne die Möglichkeit der statischen Ausblendung von Teilbereichen.

Anstelle der Verschwenkung des gesamten Moduls kann auch vorgesehen sein, dass die Projektionslinse eines oder mehrerer Module um jeweils eine vertikale Achse verschwenkbar ist.

Optisch optimal ist es dabei, wenn die Verschwenkachse durch den Brennpunkt der Projektionslinse verläuft.

Figur 6 zeigt ein kombiniertes Lichtbild aus dem linken und rechten Lichtleiter 20, 30 eines LED-Lichtquellenmoduls. Dies kann bereits ausreichen, um ein gesetzeskonformes Fernlicht zu erzeugen, das geforderte Maximum in der Mitte wird durch die Überlagerung der Lichtbilder in diesem Bereich erreicht. In der Minimalkonfiguration umfasst das Modul also nur eine linke und eine rechte LED-Lichtquelle.

Optional kann eine Erhöhung des Maximums, wie in den Figuren gezeigt, durch eine dritte LED-Lichtquelle 4 in der Mitte des Gesamt-Lichtleiters erreicht werden.

Figur 7 zeigt ein Teillichtbild erzeugt mit dem linken Lichtleiter eines erfindungsgemäßen LED-Lichtquellenmoduls, Figur 8 zeigt ein mit dem rechten Lichtleiter erzeugtes Teillichtbild, und Figur 9 ein mit dem mittleren Lichtleiter erzeugtes Lichtbild.

Figur 10 zeigt eine Lichtverteilung erzeugt mit einem gesamten Scheinwerfer. Konkret zeigt dabei Figur 10 eine Abblendlichtverteilung (schematisch dargestellt mit strichlierten Linien), erzeugt mit den beiden LED-Lichtquellen 5, 6 der einzelnen Module des Scheinwerfers, sowie überlagert ein Teil-Fernlicht erzeugt mit den rechten Lichtleitern des entsprechenden LED-Lichtquellenmodule.

Figur 11 zeigt eine von 2 Scheinwerfern erzeugte Gesamt-Fernlichtverteilung zusammen mit einer Abblendlichtverteilung, also eine Lichtverteilung, bei der alle LED-Lichtquellen 2, 3, 5, 6 und optional auch die LED-Lichtquelle 4 in Betrieb sind.

Figur 12 schließlich zeigt ein adaptives Fernlicht, welches mit zwei erfindungsgemäßen Scheinwerfern erzeugt wird, wobei beide Scheinwerfer einen identischen Aufbau hinsichtlich der Module 1, wie sie in den Figuren 1 - 5 gezeigt sind, aufweisen.

Die in Figur 12 dargestellte Lichtverteilung ergibt sich dadurch, dass beim linken Scheinwerfer die LED-Lichtquelle 3 (und optional LED-Lichtquelle 4) aktiviert sind, und die Module oder deren Linsen nach links verschwenkt sind.

Grundsätzlich besteht jeder Scheinwerfer aus zumindest einem, in der Regel mehreren Modulen. Dabei können alle Module starr, oder nur eines oder manche Module verschwenkbar (bzw. deren Linsen), andere Module starr angeordnet sein; vorzugsweise sind alle Module (Linsen) verschwenkbar.

Sind die Abblendlichteinheiten von den Fernlichteinheiten (anders als in den Figuren gezeigt) getrennt, kann das Abblendlicht unverschwenkt bleiben und nur das Fernlicht (Teilfernlicht) dem Gegenverkehr folgen bzw. an diesen angepasst werden. Eine solche Lösung ist allerdings teurer als jene wie in den Figuren gezeigt.

Bei dem rechten Scheinwerfer sind die LED-Lichtquellen 2 (also die linken) der Module (sowie optional die LED-Lichtquellen 4, also die mittleren) aktiv, wobei hier das Modul oder Linse u.U. leicht nach links mitgeführt/verschwenkt werden kann oder starr bleibt.

Kommen mehrere Fahrzeuge im Gegenverkehr entgegen, kann es notwendig sein, die gesamte links vom und beim Gegenverkehr auftretende Lichtverteilung auszublenden, in diesem Fall wären beim linken Scheinwerfer die linken LED-Lichtquellen 2 (und optional die mittleren LED-Lichtquellen 4) aktiv, deren Lichtbild gegebenenfalls durch Verschwenken mitgeführt wird, beim rechten Scheinwerfer sind ebenfalls die linken LED-Lichtquellen 2 (und optional die mittleren LED-Lichtquellen 4) aktiv.

Im Grunde kann durch beliebiges Aktivieren der unterschiedlichen, von den beiden Scheinwerfern erzeugten Teillichtverteilung, sowie gegebenenfalls durch Verschwenken der Lichtbilder der einzelnen Module optimal auf die jeweilige Verkehrssituation (Gegenverkehr und/oder Verkehr auf der eigenen Straßenseite, Anzahl der Fahrzeuge, Position des Gegenverkehrs, ...) reagiert werden.

Bei Verwendung von mehreren Modulen wie oben schon angesprochen kann z.B. eines verschwenkbar ausgeführt sein (oder die Linse), und ein weiteres oder mehrere weitere Module sind statisch. Das rechte Modul bleibt also fix stehen (oder ist fix) und beleuchtet (bei Rechtsverkehr) den rechten Fahrbahnrand, das linke Modul schwenkt mit dem Gegenverkehr mit.

## Patentansprüche

1. LED-Projektionsmodul (1), umfassend zwei oder mehrere LED-Lichtquellen (2, 3, 4), wobei jede LED-Lichtquelle (2, 3, 4) jeweils aus einer oder mehreren Leuchtdioden besteht, wobei jede LED-Lichtquelle (2, 3, 4) Licht über eine jeweils ihr zugeordnete Lichteinkoppelstelle (21, 31, 41) in einen Lichtleiter (20, 30, 40) einkoppelt, und wobei Licht aus den Lichtleitern (20, 30, 40) über eine Lichtauskoppelstelle (22, 32, 42) des Lichtleiters (20, 30, 40) austritt, und wobei das austretende Licht mittels einer Projektionslinse (90) in den Außenraum zur Bildung von zumindest einer Lichtverteilung projiziert wird,
wobei
die Lichtleiter (20, 30, 40) für die einzelnen LED-Lichtquellen (2, 3, 4) seitlich nebeneinander in einer Horizontalen liegen und unmittelbar aneinander angrenzen oder vorzugsweise einen gemeinsamen Gesamtlicht-Lichtleiter (100) bilden, sodass zwischen benachbarten Lichtleitern (20, 30, 40) Licht übertreten kann, und wobei die einzelnen Lichtaustrittsflächen (22, 32, 42) nebeneinander liegen und eine Gesamtlicht-Lichtaustrittsfläche (110) bilden, **dadurch gekennzeichnet, dass** in der
Gesamtlicht-Lichtaustrittsfläche (110), zwischen den einzelnen Lichtaustrittsflächen (22, 32, 42) eine oder mehrere Vertiefungen (201, 202) vorgesehen sind, welche sich jeweils zumindest über einen Teil der Höhenerstreckung der Gesamtlicht-Lichtaustrittsfläche (110) erstrecken.

2. Modul nach Anspruch 1, **dadurch gekennzeichnet, dass** eine zentraler Lichtleitergruppe mit zumindest einem Lichtleiter (40) vorgesehen ist, sowie links und rechts von der zentralen Lichtleitergruppe jeweils eine linke und eine rechte Lichtleitergruppe vorgesehen sind, wobei die linke und /oder die rechte Lichtleitergruppe jeweils zumindest einen Lichtleiter (20, 30) mit zugeordneter LED-Lichtquelle (2, 3) umfasst, wobei vorzugsweise die mittlere Lichtleitergruppe genau einen Lichtleiter (40) umfasst.

3. Modul nach Anspruch 2, **dadurch gekennzeichnet, dass** die linke und/oder die rechte Lichtleitergruppe jeweils genau einen Lichtleiter (20, 30) umfasst.

4. Modul nach Anspruch 2 oder 3, **dadurch gekennzeichnet, dass** das Licht der zumindest einen LED-Lichtquelle (4) des zentralen Lichtleiters (40) der zentralen Lichtleitergruppe von dem zentralen Lichtleiter (40), insbesondere von der Lichteintrittsfläche (41) des zentralen Lichtleiters (40) im Wesentlichen parallel zur optischen Achse des Moduls gerichtet wird.

5. Modul nach einem der Ansprüche 2 bis 4, **dadurch gekennzeichnet, dass** die zumindest eine LED-Lichtquelle (2, 3) einer seitlichen Lichtleitergruppe Licht unter einem Winkel ungleich 0°, auf die optische Achse des Moduls hingerichtet, in den zugehörigen Lichtleiter (20, 30) einspeist.

6. Modul nach einem der Ansprüche 1 bis 5, **dadurch gekennzeichnet, dass** sich zumindest eine Vertiefung (201, 202) zwischen zwei Lichtaustrittsflächen (32, 42; 22, 42) von den unteren Begrenzungsflächen der nebeneinander liegenden Lichtleiter (20, 30, 40) bzw. der unteren Begrenzungsfläche (130) des Gesamtlicht-Lichtleiters (100) nach oben weg erstreckt.

7. Modul nach einem der Ansprüche 1 bis 6, **dadurch gekennzeichnet, dass** sich die Vertiefung (201, 202) zwischen zwei Lichtaustrittsflächen (32, 42; 22, 42) nicht vollständig bis an die oberen Begrenzungsflächen der nebeneinander liegenden Lichtleiter (20, 30, 40) bzw. bis an die obere Begrenzungsfläche (120) des Gesamtlicht-Lichtleiters (100) erstreckt, sodass sich im oberen Bereich der nebeneinander liegenden Lichtleiter bzw. des Gesamtlicht-Lichtleiters (100) eine durchgehende Kante (121) ergibt, oder dass sich die Vertiefung (201, 202) zwischen zwei Lichtaustrittsflächen (32, 42; 22, 42) vollständig bis an die oberen Begrenzungsflächen der nebeneinander liegenden Lichtleiter (20, 30, 40) bzw. bis an die obere Begrenzungsfläche (120) des Gesamtlicht-Lichtleiters (100) erstreckt.

8. Modul nach einem der Ansprüche 1 bis 7, **dadurch gekennzeichnet, dass** zumindest eine Vertiefung (201, 202) in einem vorderen Bereich, d.h. im Bereich der Lichtaustrittsflächen (22, 32, 42; 110), eine definierte Breite aufweist, welche vorzugsweise über die gesamte Höhe der zumindest einen Vertiefung (201, 202) konstant ist, und dass sich die zumindest eine Vertiefung (201, 202) nach hinten hin, von den Lichtaustrittsflächen (22, 32, 42; 110) weggerichtet, verjüngt, wobei vorzugsweise die zumindest eine Vertiefung (201, 202) begrenzenden Wände (201', 201"; 202', 202") aufeinander zu laufen, und vorzugsweise in einer spitzen Kante (201"', 202 "') zusammen laufen.

9. Modul nach Anspruch 8, **dadurch gekennzeichnet, dass** die innere Wand (201", 202"), d.h. die der zentralen Lichtleitergruppe zugewandte Wand einer Vertiefung (201, 202) eben ausgebildet ist, vorzugsweise als eine vertikale Ebene.

10. Modul nach Anspruch 8, **dadurch gekennzeichnet, dass** die äußere Wand (201', 202') einer Vertiefung (201, 202) gekrümmt ausgebildet ist, vorzugsweise von der inneren Wand (201", 202") weggekrümmt.

11. Modul nach einem der Ansprüche 1 bis 10, **dadurch gekennzeichnet, dass** zumindest eine Vertiefung (201, 202) derart ausgelegt, d.h. hinsichtlich ihrer Form und/oder hinsichtlich der Länge ihrer Erstreckung nach hinten, von der bzw. den Lichtaustrittsfläche(n) weg derart ausgebildet ist, dass Licht aus der rechten/linken Lichtleitergruppe bzw. aus dem zumindest einen rechten/linken Lichtleiter (20, 30) nicht in die linke/rechte Lichtleitergruppe bzw. den zumindest einen linken/rechten Lichtleiter (30, 20) eintreten kann.

12. Modul nach einem der Ansprüche 1 bis 11, **dadurch gekennzeichnet, dass** zumindest eine Vertiefung (201, 202) derart ausgelegt, d.h. hinsichtlich ihrer Form und/oder hinsichtlich der Länge ihrer Erstreckung nach hinten, von der bzw. den Lichtaustrittsfläche(n) weg derart ausgebildet ist, dass Licht aus der mittleren Lichtleitergruppe bzw. aus dem zumindest einen mittleren Lichtleiter (40) nicht in die linke bzw. rechte Lichtleitergruppe bzw. den zumindest einen linken bzw. zumindest einen rechten Lichtleiter (20, 30) eintreten kann.

13. Modul nach einem der Ansprüche 1 bis 12, **dadurch gekennzeichnet, dass** der Gesamt-Lichtleiter (100) an seiner rückwärtigen, von den Lichtauskoppelflächen (22, 32, 42) abgewandten Seite, derart ausgebildet ist, dass Lichtstrahlen von einer äußeren Lichtquelle (2, 3) nicht durch eine einer anderen äußeren LED-Lichtquelle (3, 2) zugeordnete Lichtauskoppelfläche (32, 22) austreten können, wobei vorzugsweise rückseitige Vertiefungen (70) vorgesehen sind, welche Licht von den äußeren LED-Lichtquellen (2, 3), welche in den einer anderen äußeren LED-Lichtquelle (3, 2) zugeordneten Lichtleiter (30, 20) gelangen würden, abgeblockt werden.

14. Modul nach einem der Ansprüche 1 bis 13, **dadurch gekennzeichnet, dass** oberhalb der Lichtleiter (20, 30, 40) bzw. des Gesamtlicht-Lichtleiters (100) zumindest eine LED-Lichtquelle (5, 6) angeordnet ist, welche Licht auf zumindest eine Optik, z.B. einen Reflektor (7, 8) emittiert, und wobei das von der zumindest einen Optik, z.B. dem zumindest einen Reflektor (7, 8) emittierte Licht in einen unteren Bereich der Projektionslinse (90) abgestrahlt wird, und wobei die obere Kante (121), welche die Gesamtlicht-Lichtaustrittsfläche (110) begrenzt, als Hell-Dunkel-Grenze im Lichtbild abgebildet wird, wobei vorzugsweise zwei LED-Lichtquellen (5, 6) mit jeweils einem zugeordneten Reflektor (7, 8) vorgesehen sind.

15. Modul nach Anspruch 14, **dadurch gekennzeichnet, dass** die Oberseite (120) und/oder die Unterseite (130) der Lichtleiter bzw. des Gesamtlicht-Lichtleiters (100) Licht zumindest bereichsweise reflektierend ausgebildet ist/sind.

## Claims

1. An LED projection module (1), comprising two or more LED light sources (2, 3, 4), wherein each LED light source (2, 3, 4) consists of one or more light-emitting diodes, wherein each LED light source (2, 3, 4) couples light via a light coupling-in point (21, 31, 41) associated therewith into an optical waveguide (20, 30, 40), and wherein light exits from the optical waveguides (20, 30, 40) via a light decoupling point (22, 32, 42) of the optical waveguide (20, 30, 40), and wherein the exiting light is projected by means of a projection lens (90) into the outside space so as to form at least one light distribution, wherein
the optical waveguides (20, 30, 40) for the individual LED light sources (2, 3, 4) are arranged laterally side by side in a horizontal plane and border one another directly or preferably form a common total-light optical waveguide (100), such that light can pass over between adjacent optical waveguides (20, 30, 40), and wherein the individual light outlet surfaces (22, 32, 42) are arranged side by side and form a total-light light outlet surface (110),
**characterized in that**
one or more indentations (201, 202) is/are provided in the total-light light outlet surface (110), between the individual light outlet surfaces (22, 32, 42), and in each case extend at least over part of the vertical extension of the total-light light outlet surface (110).

2. The module according to Claim 1, **characterised in that** a central optical waveguide group comprising at least one optical waveguide (40) is provided, and a left and right optical waveguide group are provided to the left and to the right of the central optical waveguide group respectively, wherein the left and/or the right optical waveguide group in each case comprise/comprises at least one optical waveguide (20, 30) with associated LED light source (2, 3), wherein preferably the middle optical waveguide group comprises exactly one optical waveguide (40).

3. The module according to Claim 2, **characterised in that** the left and/or the right optical waveguide group in each case comprise/comprises exactly one optical waveguide (20, 30).

4. The module according to Claim 2 or 3, **characterised in that** the light of the at least one LED light source (4) of the central optical waveguide (40) of the central optical waveguide group is directed from the central optical waveguide (40), in particular from the light inlet surface (41) of the central optical waveguide (40), substantially parallel to the optical axis of the module.

5. The module according to one of Claims 2 to 4, **characterised in that** the at least one LED light source (2, 3) of a side optical waveguide group feeds light at an angle not equal to 0°, directed to the optical axis of the module, into the associated optical waveguide (20, 30).

6. The module according to one of Claims 1 to 5, **characterised in that** at least one indentation (201, 202) between two light outlet surfaces (32, 42; 22, 42) extends upwardly away from the lower delimiting surfaces of the optical waveguides (20,30,40) arranged side by side or the lower delimiting surface (130) of the total-light optical waveguide (100).

7. The module according to one of Claims 1 to 6, **characterised in that** the indentation (201, 202) between two light outlet surfaces (32, 42; 22, 42) does not extend completely as far as the upper delimiting surfaces of the optical waveguides (20, 30, 40) arranged side by side or as far as the upper delimiting surface (120) of the total-light optical waveguide (100), such that a continuous edge (121) is produced in the upper region of the optical waveguides arranged side by side or of the total-light optical waveguide (100), or the indentation (201, 202) between two light outlet surfaces (32, 42; 22, 42) extends completely as far as the upper delimiting surfaces of the optical waveguides (20, 30, 40) arranged side by side or as far as the upper delimiting surface (120) of the total-light optical waveguide (100).

8. The module according to one of Claims 1 to 7, **characterised in that** at least one indentation (201, 202) in a front region, that is to say in the region of the light outlet surfaces (22, 32, 42; 110), has a defined width which is preferably constant over the entire height of the at least one indentation (201, 202), and **in that** the at least one indentation (201, 202) tapers rearwardly, in a manner directed away from the light outlet surfaces (22, 32, 42; 110), wherein preferably the at least one indentation (201, 202) has delimiting walls (201', 201"; 202', 202"), which run towards one another and preferably converge at an acute angle (201"', 202"').

9. The module according to Claim 8, **characterised in that** the inner wall (201", 202") of an indentation (201, 202), that is to say the wall facing the central optical waveguide group, is configured in a planar manner, preferably as a vertical plane.

10. The module according to Claim 8, **characterised in that** the outer wall (201', 202') of an indentation (201, 202) is curved, preferably curved away from the inner wall (201", 202").

11. The module according to one of Claims 1 to 10, **characterised in that** at least one indentation (201, 202) is designed, that is to say configured in terms of its form and/or in terms of the length of its extension rearwardly, away from the light outlet surface(s), in such a way that light from the right/left optical waveguide group or from the at least one right/left optical waveguide (20, 30) cannot enter the left/right optical waveguide group or the at least one left/right optical waveguide (30, 20).

12. The module according to one of Claims 1 to 11, **characterised in that** at least one indentation (201,202) is designed, that is to say configured in terms of its form and/or in terms of the length of its extension rearwardly, away from the light outlet surface(s), in such a way that light from the middle optical waveguide group or from the at least one middle optical waveguide (40) cannot enter the left or right optical waveguide group or the at least one left or at least one right optical waveguide (20, 30).

13. The module according to one of Claims 1 to 12, **characterised in that** the total optical waveguide (100) is configured on the rear side thereof facing away from the light decoupling surface (22, 32, 42) in such a way that light rays from one outer light source (2, 3) cannot exit through a light decoupling surface (32, 22) associated with another outer LED light source (3, 2), wherein rear-side indentations (70) are preferably provided which block light from the outer LED light sources (2, 3), which light would otherwise pass into the optical waveguide (30, 20) associated with another outer LED light source (3, 2).

14. The module according to one of Claims 1 to 13, **characterised in that** at least one LED light source (5, 6) is arranged above the optical waveguides (20,30,40) or the total-light optical waveguide (100) and emits light onto at least one optics, for example a reflector (7, 8), and wherein the light emitted from the at least one optics, for example the at least one reflector (7, 8) is radiated into a lower region of the projection lens (90), and wherein the upper edge (121), which delimits the total-light light outlet surface (110), is reproduced as a light/dark border in the light exposure, wherein preferably two LED light sources (5, 6) are each provided with an associated reflector (7, 8).

15. The module according to Claim 14, **characterised in that** the upper side (120) and/or the underside (130) of the optical waveguides or of the total-light optical waveguide (100) is/are configured so as to reflect light at least in regions.

## Revendications

1. Module de projection à LED (1), comportant au moins deux sources lumineuses à LED (2, 3, 4), chaque source lumineuse à LED (2, 3, 4) se composant respectivement d'une ou plusieurs diodes électroluminescentes, chaque source lumineuse à LED (2, 3, 4) couplant de la lumière dans un guide d'onde optique (20, 30, 40) par l'intermédiaire d'un point de couplage de lumière respectif (21, 31, 41) qui lui est associé, et de la lumière sortant des guides d'onde optique (20, 30, 40) par l'intermédiaire d'un point de découplage de lumière (22, 32, 42) du guide d'onde optique (20, 30, 40), et la lumière sortante étant projetée au moyen d'une lentille de projection (90) dans l'espace extérieur pour former au moins une distribution de lumière,
les guides d'onde optique (20, 30, 40) pour les sources lumineuses à LED individuelles (2, 3, 4) étant disposés latéralement côte à côte dans un plan horizontal et étant directement adjacents l'un à l'autre ou, de préférence, formant un guide d'onde optique commun (100) pour la lumière totale, de telle sorte que de la lumière peut déborder entre des guides d'onde optique adjacents (20, 30, 40), et les surfaces de sortie de lumière individuelles (22, 32, 42) étant disposées côte à côte et formant une surface de sortie de lumière (110) pour la lumière totale, **caractérisé par le fait que**, dans la surface de sortie de lumière (110) pour la lumière totale, entre les surfaces de sortie de lumière individuelles (22, 32, 42), sont prévus un ou plusieurs creux (201, 202), lesquels s'étendent chacun au moins sur une partie de l'étendue verticale de la surface de sortie de lumière (110) pour la lumière totale.

2. Module selon la revendication 1, **caractérisé par le fait qu'**un groupe de guide d'onde optique central comportant au moins un guide d'onde optique (40) est prévu, ainsi qu'à gauche et à droite du groupe de guide d'onde optique central sont prévus respectivement un groupe de guide d'onde optique gauche et un groupe de guide d'onde optique droit, le groupe de guide d'onde optique gauche et/ou le groupe de guide d'onde optique droit comportant chacun au moins un guide d'onde optique (20, 30) ayant une source lumineuse à LED (2, 3) associée, le groupe de guide d'onde optique central comportant, de préférence, exactement un guide d'onde optique (40).

3. Module selon la revendication 2, **caractérisé par le fait que** le groupe de guide d'onde optique gauche et/ou le groupe de guide d'onde optique droit comportent chacun exactement un guide d'onde optique (20, 30).

4. Module selon l'une des revendications 2 ou 3, **caractérisé par le fait que** la lumière de la au moins une source lumineuse à LED (4) du guide d'onde optique central (40) du groupe de guide d'onde optique central est dirigée du guide d'onde optique central (40), en particulier de la surface d'entrée de lumière (41) du guide d'onde optique central (40), sensiblement parallèlement à l'axe optique du module.

5. Module selon l'une des revendications 2 à 4, **caractérisé par le fait que** la au moins une source lumineuse à LED (2, 3) d'un groupe de guide d'onde optique latéral fournit de la lumière à un angle différent de 0°, en direction de l'axe optique du module, dans le guide d'onde optique (20, 30) associé.

6. Module selon l'une des revendications 1 à 5, **caractérisé par le fait qu'**au moins un creux (201, 202) entre deux surfaces de sortie de lumière (32, 42 ; 22, 42) s'étend vers le haut en s'éloignant des surfaces de délimitation inférieures des guides d'onde optique (20, 30, 40) disposés côte à côte ou de la surface de délimitation inférieure (130) du guide d'onde optique (100) pour la lumière totale.

7. Module selon l'une des revendications 1 à 6, **caractérisé par le fait que** le creux (201, 202), entre deux surfaces de sortie de lumière (32, 42 ; 22, 42), ne s'étend pas complètement aussi loin que les surfaces de délimitation supérieures des guides d'onde optique (20, 30, 40) disposés côte à côte ou aussi loin que la surface de délimitation supérieure (120) du guide d'onde optique (100) pour la lumière totale, de telle sorte qu'un bord continu (121) est produit dans la région supérieure des guides d'onde optique disposés côte à côte ou du guide d'onde optique (100) pour la lumière totale, ou **par le fait que** le creux (201, 202), entre deux surfaces de sortie de lumière (32, 42 ; 22, 42), s'étend complètement aussi loin que les surfaces de délimitation supérieures des guides d'onde optique (20, 30, 40) disposés côte à côte ou aussi loin que la surface de délimitation supérieure (120) du guide d'onde optique (100) pour la lumière totale.

8. Module selon l'une des revendications 1 à 7, **caractérisé par le fait qu'**au moins un creux (201, 202) dans une région avant, à savoir dans la région des surfaces de sortie de lumière (22, 32, 42 ; 110), présente une largeur définie, laquelle, de préférence, est constante sur toute la hauteur du au moins un creux (201, 202), et **par le fait que** le au moins un creux (201, 202) se rétrécit vers l'arrière, en s'éloignant des surfaces de sortie de lumière (22, 32, 42 ; 110), où, de préférence, les parois (201', 201"; 202', 202") délimitant au moins un creux (201, 202) s'étendant en se rapprochant et, de préférence, convergeant en un bord aigu (201"', 202"').

9. Module selon la revendication 8, **caractérisé par le fait que** la paroi intérieure (201", 202"), à savoir la paroi faisant face au groupe de guide d'onde optique central, d'un creux (201, 202), est configurée de manière plane, de préférence sous la forme d'un plan vertical.

10. Module selon la revendication 8, **caractérisé par le fait que** la paroi extérieure (201', 202') d'un creux (201, 202) est configurée de manière incurvée, de préférence incurvée en s'éloignant de la paroi intérieure (201", 202").

11. Module selon l'une des revendications 1 à 10, **caractérisé par le fait qu'**au moins un creux (201, 202) est conçu, à savoir est formé, en ce qui concerne sa forme et/ou en ce qui concerne la longueur de son étendue vers l'arrière, en s'éloignant de la ou des surfaces de sortie de lumière, de telle sorte que la lumière provenant du groupe de guide d'onde optique droit/du groupe de guide d'onde optique gauche ou du au moins un guide d'onde optique droit/gauche (20, 30) ne peut pas entrer dans le groupe de guide d'onde optique gauche/droit ou le au moins un guide d'onde optique gauche/droit (30, 20).

12. Module selon l'une des revendications 1 à 11, **caractérisé par le fait qu'**au moins un creux (201, 202) est conçu, à savoir est formé, en ce qui concerne sa forme et/ou en ce qui concerne la longueur de son étendue vers l'arrière, en s'éloignant de la ou des surfaces de sortie de lumière, de telle sorte que la lumière provenant du groupe de guide d'onde optique central ou du au moins un guide d'onde optique central (40) ne peut pas entrer dans le groupe de guide d'onde optique gauche ou le groupe d'onde optique droit ou le au moins un guide d'onde optique gauche ou au moins un guide d'onde optique droit (20, 30).

13. Module selon l'une des revendications 1 à 12, **caractérisé par le fait que** le guide d'onde optique (100) pour la lumière totale, sur son côté arrière, opposé aux surfaces de découplage de lumière (22, 32, 42), est formé de telle sorte que des faisceaux de lumière provenant d'une source de lumière extérieure (2, 3) ne peuvent pas sortir par une surface de découplage de lumière (32, 22) associée à une autre source lumineuse à LED extérieure (3, 2), où, de préférence, des creux (70) côté arrière étant prévus, lesquels bloquent la lumière provenant des sources lumineuses à LED extérieures (2, 3), qui devrait parvenir dans le guide d'onde optique (30, 20) associé à une autre source lumineuse à LED extérieure (3, 2).

14. Module selon l'une des revendications 1 à 13, **caractérisé par le fait qu'**au moins une source lumineuse à LED (5, 6) est disposée au-dessus des guides d'onde optique (20, 30, 40) ou du guide d'onde optique (100) pour la lumière totale, laquelle émet de la lumière sur au moins une optique, par exemple un réflecteur (7, 8), et où la lumière émise par la au moins une optique, par exemple le au moins un réflecteur (7, 8), est irradiée dans une région inférieure de la lentille de projection (90), et où le bord supérieur (121), lequel délimite la surface de sortie de lumière (110) pour la lumière totale, est reproduit en tant que ligne de coupure clair-sombre dans l'image lumineuse, où de préférence deux sources lumineuses à LED (5, 6) sont dotées chacune d'un réflecteur associé (7, 8).

15. Module selon la revendication 14, **caractérisé par le fait que** le côté supérieur (120) et/ou le côté inférieur (130) des guides d'onde optique ou du guide d'onde optique (100) pour la lumière totale est/sont formés de façon à réfléchir la lumière au moins par endroits.
